# EUROPEAN PATENT SPECIFICATION

(11) **EP 2 904 187 B1**
(45) Date of publication and mention of the grant of the patent: **19.02.2020**
(21) Application number: 13843211.7
(22) Date of filing: 30.09.2013
(51) Int. Cl.: E21B 17/00, C23C 4/02, C23C 4/08, C23C 4/18, C23C 28/02, C23C 4/11, E21B 47/12

(54) **INSULATIVE COATING PROCESSES FOR ELECTROMAGNETIC TELEMETRY MANDRELS**
ISOLIERBESCHICHTUNGSVERFAHREN FÜR ELEKTROMAGNETISCHE TELEMETRIEDORNE
PROCESSUS DE REVÊTEMENT ISOLANT POUR MANDRINS DE TÉLÉMÉTRIE ÉLECTROMAGNÉTIQUE

(30) Priority: 05.10.2012 US 201261710353 P
(43) Date of publication of application: 12.08.2015
(73) Proprietor: Halliburton Energy Services Inc., Houston, Texas 77032 (US)
(72) Inventor: CARTER, Daniel, Patrick, Conroe, TX 77385 (US); HENDRICKS, Will, Edgar, Houston, TX 77007 (US); ONYA, Chuka, Benjamin, Houston, TX 77084 (US)
(74) Representative: King, Lawrence
(86) International application number: PCT/US2013/062630
(87) International publication number: WO 2014/055412

(56) References cited:
- WO-A1-2009/032504
- WO-A2-00/22329
- RU-C1- 2 278 258
- US-A1- 2002 066 491
- US-A1- 2005 167 098
- US-A1- 2005 167 098
- US-A1- 2006 201 717
- US-A1- 2006 220 650
- US-A1- 2007 131 412
- US-A1- 2007 131 412
- US-A1- 2009 159 146

## Description

### BACKGROUND

The embodiments herein relate to downhole electromagnetic telemetry systems and, more particularly, to insulative coating processes for electromagnetic telemetry antenna assemblies.

In measurement while drilling (MWD) applications, a variety of communication and transmission techniques are used to provide real time data from the vicinity of a drill bit to the surface during drilling operations. One technique uses a downhole antenna associated with the drill string and an MWD tool to transmit electromagnetic waves through the earth and to a receiver arranged at the surface. The receiver receives and records the electromagnetic data, thereby providing an operator with real time data associated with drilling parameters such as bit weight, torque, and wear and bearing conditions. MWD applications may also provide an operator with real time data associated with the physical properties of the subterranean formation being drilled such as pressure, temperature, and wellbore trajectory. Consideration of such information can result in faster penetration rates, better trip planning, reduced equipment failures, fewer delays for directional surveys, and the elimination of the need to interrupt drilling for abnormal pressure detection.

As an integral part of the MWD tool, the downhole antenna is housed in a mandrel that electrically isolates two portions of drill string, thereby creating suitable antenna capabilities. In order to electrically isolate the two portions of the drill string, the mandrel will typically include an insulative coating applied to its exterior surface. It has been found, however, that certain processes used in applying the insulative coating to the mandrel have resulted in coating inconsistencies and/or contamination. For instance, current coating processes often allow the coating to become contaminated by allowing moisture in the air or from cutting and sizing operations to permeate into the coating. As a result, the insulative coating will be more susceptible to failure in harsh downhole environments. Failure of the coating removes the electrical isolation, which equates to a failure of the antenna and the inability to perform MWD.

RU2004136861 discloses an insulation covering of electric drilling string separator.

### BRIEF DESCRIPTION OF THE DRAWINGS

The following figures are included to illustrate certain aspects of the embodiments disclosed herein, and should not be viewed as exclusive embodiments. The subject matter disclosed is capable of considerable modifications, alterations, combinations, and equivalents in form and function, as will occur to those skilled in the art and having the benefit of this disclosure.
FIG. 1 illustrates a cross-sectional side view of an exemplary mandrel that may house an antenna used in a downhole electromagnetic telemetry system.
FIG. 2 illustrates an enlarged view of an exemplary electrical insulation.
FIG. 3 illustrates an enlarged view of another exemplary electrical insulation, according to claims 1 and 7.

### DETAILED DESCRIPTION

The embodiments herein relate to downhole electromagnetic telemetry systems and, more particularly, to insulative coating processes for electromagnetic telemetry antenna assemblies.

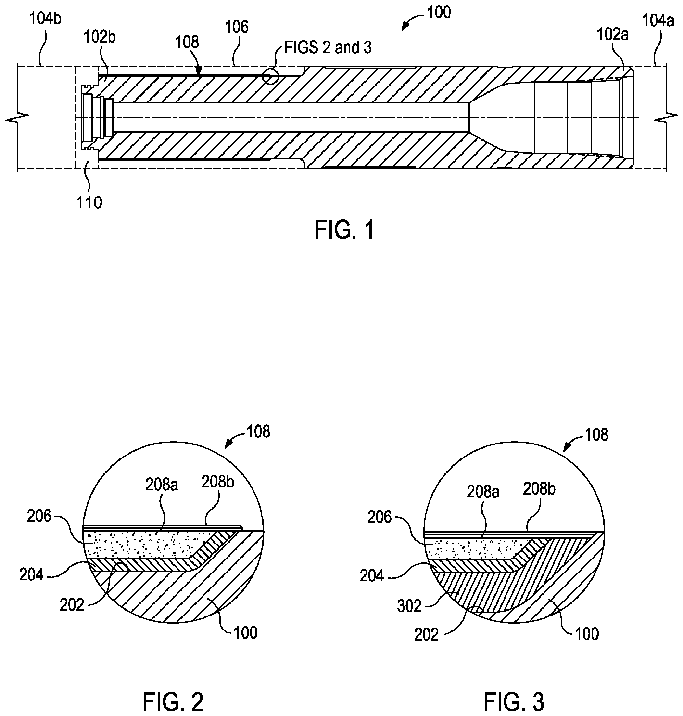

Referring to FIG. 1, illustrated is a cross-sectional view of an exemplary mandrel 100 that may form part of an antenna used in a downhole electromagnetic telemetry system. In particular, the mandrel 100 may be used as an integral part of the antenna for a measurement while drilling (MWD) tool. As illustrated, the mandrel 100 has an uphole end 102a and a downhole end 102b. The uphole end 102a of the mandrel 100 are coupled to an uphole drill string section 104a, and the downhole end 102b of the mandrel 100 are coupled or otherwise attached to a downhole drill string section 104b. In at least one embodiment, as illustrated, a sleeve 106 and a hang-off collar 110 (shown in phantom) may be incorporated into the downhole end 102b of the mandrel 100 and otherwise facilitate the coupling of the downhole end 102b to the downhole drill string section 104b.

The mandrel 100 may exhibit a variety of sizes including, but not limited to, 8.89 cm (3.5 in), 12.065 cm (4.75 in), 16.51 cm (6.5 in), 20.32 cm (8 in), and 24.13 cm (9.5 in). In operation, the mandrel 100 is configured to electrically isolate the uphole drill string section 104a from the downhole drill string section 104b. Electrical isolation allows electromagnetic signals to be generated for data telemetry and to be transmitted to the surface. To at least partially accomplish this, a layer or substrate of electrical insulation 108 may be applied to a portion of the mandrel 100.

For example, the electrical insulation 108 may be applied to a reduced-diameter portion of the mandrel 100, which may be configured to accommodate the sleeve 106 for coupling the mandrel 100 to the downhole drill string section 104b. In other embodiments, the electrical insulation 108 may be applied to any other portion of the mandrel 100, without departing from the scope of the disclosure. For example, in some embodiments, the electrical insulation 108 may be applied to the outer radial surface of the entire mandrel 100. In other embodiments, the electrical insulation 108 may instead be applied to a portion of the uphole end 102a of the mandrel 100, without departing from the scope of the disclosure.

Referring to FIG. 2, with continued reference to FIG. 1, an enlarged view of the layer of electrical insulation 108 is illustrated. As illustrated, the electrical insulation 108 may be applied to an outer radial surface 202 of the mandrel 100. In some embodiments, the mandrel 100 may be made of a base metal such as, but not limited to, steel, stainless steel, a steel alloy, or any conventional metal suitable for downhole use. The electrical insulation 108 includes a bond coat 204 applied directly to the outer radial surface 202 of the mandrel 100 and an electrical isolation layer 206 applied on top of the bond coat 204. The bond coat 204 may provide a substrate configured to facilitate a more suitable adhering surface for the electrical isolation layer 206. According to claim 1 the bond coat 204 is a nickel-chromium alloy or molybdenum, nickel-aluminum composites, aluminum bronze, pre-alloyed nickel aluminum, or a zinc-based alloy.

The isolation layer 206 is applied to the bond coat 204 using a thermal spraying technique. For example, in at least one embodiment, the isolation layer 206 may be applied to the bond coat 204 using high velocity oxy-fuel coating processes. In other embodiments, the isolation layer 206 may be applied to the bond coat 204 using any other thermal spraying technique such as, but not limited to, plasma spraying, detonation spraying, wire arc spraying, flame spraying, warm spraying, cold spraying, combinations thereof, or the like.

The electrical isolation layer 206 is made of material that provides electrical isolation between opposing metal surfaces or interfaces according to claim 1 i.e. zirconium oxide, aluminum oxide, chromium oxide, titanium oxide, dioxides thereof, any combination thereof. As will be appreciated by those skilled in the art, using a ceramic as the electrical isolation layer 206 may prove advantageous on account of the high strength of ceramics, the ability of ceramics to withstand the elevated pressures and temperatures often experienced in harsh downhole environments, and the corrosion resistance of ceramics. Ceramics may also prove advantageous on account of their being an excellent electrical isolating material. In yet other embodiments, however, the electrical isolation layer 206 is made of baked glass, porcelain (*e.g*., clay, quartz or alumina, feldspar, etc.), a polymeric material, a resin material (including natural or synthetic resins), a plastic, any composites thereof, any combinations thereof, or the like.

In order to prevent undesirable contamination of or damage to the isolation layer 206, a first sealant layer 208a, is applied to the isolation layer 206. In some embodiments, the first sealant layer 208a may be of any material capable of forming a protective barrier against gases and liquids. In some embodiments, the first sealant layer 208a may be a thermal sealant that is resistant to high temperature, such as those encountered in downhole environments. In some embodiments, the first sealant layer 208a may be made of materials including, but not limited to, an epoxy, a phenolic, a furan, a polymethacrylate, a silicone, a polyester, a polyurethane, a polyvinylester, a wax, phosphoric acid, an aluminum phosphate, a sodium silicate, an ethyl silicate, chromic acid, and any combinations thereof. In other embodiments, the first sealant layer 208a may be made by a sol-gel process in which a stable sol (or colloidal suspension) precursor is hydrolyzed into to a gel, followed by calcination of the gel at elevated temperature to an oxide. The sol precursors may be metal alkoxides, nitrates, hydroxides, and any combination thereof.

In some embodiments, the first sealant layer 208a may be applied directly to the electrical isolation layer 206. The first sealant layer 208a may be configured as a thermal spray sealer, as known by those skilled in the art. Once dried and cured, the first sealant layer 208a may form a protective barrier against gases and liquids. In some embodiments, the first sealant layer 208a is applied to the electrical isolation layer 206 immediately after the electrical isolation layer 206 is deposited on the mandrel 100. The first sealant layer 208a may be configured to seal any existing porosity within the electrical isolation layer 206 that may otherwise be permeated by moisture in the atmosphere or other contaminants.

The first sealant layer 208a may also be configured to protect the electrical isolation layer 206 during subsequent machining operations, which could also compromise the integrity of the electrical isolation layer 206. For instance, following the application of the first sealant layer 208a, the mandrel 100 may be machined to final sizing. Such machining may involve turning, milling, and/or grinding the mandrel 100 until proper tolerances are achieved. The first sealant layer 208a may protect the electrical isolation layer 206 from machining debris and/or any cutting fluid used.

The mandrel 100 is then heat treated (*e.g.*, baked) in an oven at an elevated temperature. In some embodiments, the elevated temperature may be any temperature exceeding the boiling point of water. Heat treating the mandrel 100 may be configured to remove any remaining moisture and/or cutting fluids from the surface of the mandrel 100 and, in particular, from the electrical isolation layer 206 and/or the first sealant layer 208a. For instance, moisture from the air or machining fluids may have contaminated the electrical isolation layer 206 and/or the first sealant layer 208a before, during, and/or after the final sizing operations.

In some embodiments, following the heat treatment, a second sealant layer 208b may be applied to the electrical isolation layer 206. In at least one embodiment, the second sealant layer 208b may be applied to or otherwise about the first sealant layer 208a while the mandrel 100 is still warm from the heat treatment or otherwise before it cools to room temperature. The second sealant layer 208b may be made of one or more of the materials listed above for the first sealant layer 208a and may also serve to form a protective barrier against gases and liquids. Moreover, the second sealant layer 208b may also be a thermal sealant that is resistant to high temperature, such as those encountered in downhole environments. Accordingly, in at least one embodiment, the mandrel 100 may have two layers of sealant 208, first sealant layer 208a and second sealant layer 208b, applied to the electrical isolation layer 206 to protect the electrical isolation layer 206 from contamination and/or damage.

Referring now to FIG. 3, with continued reference to FIG. 2, an enlarged view an embodiment according to claim 1 of the electrical insulation 108 is illustrated. As illustrated, the electrical insulation 108 again includes the bond coat 204 and the electrical isolation layer 206 applied on top of the bond coat 204. However, the electrical insulation 108 of FIG. 3 further includes a buffer layer 302 interposing the bond coat 204 and the outer radial surface 202 of the mandrel 100. In some embodiments, for instance, the bond coat 204 may have difficulty bonding with the outer radial surface 202 of the mandrel 100, and the buffer layer 302 is applied to allow for increased bonding capabilities of the bond coat 204. This may prove especially advantageous in embodiments where the mandrel 100 exhibits austenitic-nonmagnetic properties. The buffer layer 302 is made of INCONEL® 625 or any other austenitic nickel-chromium-based alloy.

The electrical insulation 108 illustrated in FIG. 3 is applied to the mandrel 100 using a process substantially similar to the process described above with reference to FIG. 2. Accordingly, the electrical insulation 108 may be applied using a double sealing process, including the first sealant layer 208a and the second sealant layer 208b. Past attempts used only one sealing process or no sealers at all. By applying the sealer 208 directly to the isolation layer 206, the insulation properties of the mandrel 100 may be increased and the isolation layer 206 is prevented from absorbing moisture from the atmosphere.

In some embodiments, the bond coat 204 may be applied onto the outer radial surface 202 of the mandrel 100 in the range of between about 0.00254 cm (0.001 in) to about 0.127 cm (0.05 in) thick, and any thickness therebetween. In some embodiments, the electrical isolation layer 206 may be applied to the bond coat 204 in the range of between about 0.0254 cm (0.01 in) to about 1.27 cm (0.5 in) thick, and any value therebetween. In at least one embodiment, the electrical isolation layer 206 may be applied to a thickness of about 0.0762 cm (0.030 in). In some embodiments, the buffer layer 302 may be applied onto the outer radial surface 202 of the mandrel 100 in the range of between about 0.0254 cm (0.01 in) to about 1.27 cm (0.5 in) thick, and any value therebetween.

Therefore, the embodiments herein are well adapted to attain the ends and advantages mentioned as well as those that are inherent therein. While compositions and methods are described in terms of "comprising," "containing," or "including" various components or steps, the compositions and methods can also "consist essentially of" or "consist of" the various components and steps. All numbers and ranges disclosed above may vary by some amount. Whenever a numerical range with a lower limit and an upper limit is disclosed, any number and any included range falling within the range is specifically disclosed. In particular, every range of values (of the form, "from about a to about b," or, equivalently, "from approximately a to b," or, equivalently, "from approximately a-b") disclosed herein is to be understood to set forth every number and range encompassed within the broader range of values. Also, the terms in the claims have their plain, ordinary meaning unless otherwise explicitly and clearly defined by the patentee. Moreover, the indefinite articles "a" or "an," as used in the claims, are defined herein to mean one or more than one of the element that it introduces.

## Claims

1. A mandrel (100), comprising:
an elongate body having a first end (102a) and a second end (102b);
electrical insulation (108) applied to at least a portion of the elongate body, the electrical insulation (108) comprising a bond coat (204) applied to an outer radial surface (202) of the elongate body and an electrical isolation layer (206) applied on top of the bond coat (204) and a first sealant layer (208a) applied to the electrical isolation layer (206) followed by a heat treatment of the mandrel (100);
**characterized in that** the first and second ends (102a, 102b) are coupled to uphole and downhole drill string sections (104a, 104b), respectively and wherein the bond coat (204) comprises a material selected from the group consisting of a nickel-chromium alloy, molybdenum, a nickel-aluminum composite, aluminum bronze, pre-alloyed nickel aluminum, and a zinc-based alloy and wherein the electrical isolation layer (206) comprises a material selected from the group consisting of zirconium oxide, aluminum oxide, chromium oxide, titanium oxide, dioxides thereof, baked glass, porcelain, a polymeric material, a resin material (including natural or synthetic resins), plastics, and any composites thereof;
**characterized in that** the electrical insulation (108) further comprises a buffer layer (302) interposing the bond coat (204) and the outer radial surface (202) of the elongate body, wherein the buffer layer comprises an austenitic nickel-chromium-based alloy.

2. The mandrel of claim 1, further comprising a second sealant layer (208b) applied to the first sealant layer (208a).

3. The mandrel of claim 2, wherein the first and second sealant layers (208a, 208b) comprise a material selected from the group consisting of an epoxy, a phenolic, a furan, a polymethacrylate, a silicone, a polyester, a polyurethane, a polyvinylester, a wax, phosphoric acid, an aluminum phosphate, a sodium silicate, an ethyl silicate, chromic acid, and any combinations thereof.

4. The mandrel of claim 2, wherein the second sealant layer (208b) is applied to the first sealant layer (208a) following heat treatment of the mandrel (100); preferably wherein the second sealant layer (208b) is applied to the first sealant layer (208a) prior to the mandrel (100) reaching room temperature.

5. The mandrel of claim 1, wherein the electrical insulation (108) is applied to a reduced-diameter portion of the elongate body.

6. The mandrel of claim 1, wherein the electrical isolation layer (206) is applied to a thickness of 0.030 inches (0.76 mm).

7. A process, comprising:
applying electrical insulation (108) to an outer radial surface (202) of a mandrel (100) according to claim 1, the electrical insulation (108) comprising a bond coat (204) and an electrical isolation layer (206);
wherein applying the electrical insulation (108) comprises:
applying a buffer layer (302) to the outer radial surface (202) of the mandrel (100) wherein the buffer layer comprises an austenitic nickel-chromium-based alloy;
applying the bond coat (204) to the buffer layer (302) wherein the bond coat (204) comprises a material selected from the group consisting of a nickel-chromium alloy, molybdenum, a nickel-aluminum composite, aluminum bronze, pre-alloyed nickel aluminum, and a zinc-based alloy;
applying the electrical isolation layer (206) on top of the bond coat (204) wherein the electrical isolation layer (206) comprises a material selected from the group consisting of zirconium oxide, aluminum oxide, chromium oxide, titanium oxide, dioxides thereof, baked glass, porcelain, a polymeric material, a resin material (including natural or synthetic resins), plastics, and any composites thereof; wherein the electrical isolation layer is applied by (206) by thermal spraying; applying a first sealant layer (208a) to the electrical isolation layer (206) and heat treating the mandrel (100) in an oven.

8. The process of claim 7, further comprising applying a second sealant layer (208b) to the first sealant layer (208a) following heat treating the mandrel (100) in the oven; preferably wherein the process further comprises applying the second sealant layer (208b) to the first sealant layer (208a) prior to the mandrel (100) reaching room temperature.

9. The process of claim 8, wherein the first and second sealant layers (208a, 208b) comprise a material selected from the group consisting of an epoxy, a phenolic, a furan, a polymethacrylate, a silicone, a polyester, a polyurethane, a polyvinylester, a wax, phosphoric acid, an aluminum phosphate, a sodium silicate, an ethyl silicate, chromic acid, and any combinations thereof.

10. The process of claim 7, further comprising applying the electrical insulation (108) to a reduced-diameter portion of the mandrel.

11. The process of claim 7, wherein the process further comprises applying the electrical insulation (108) to a thickness of 0.030 inches (0.76 mm).

## Patentansprüche

1. Spindel (100), umfassend:
einen länglichen Körper, der ein erstes Ende (102a) und ein zweites Ende (102b) aufweist;
eine elektrische Isolierung (108), die auf zumindest einen Abschnitt des länglichen Körpers aufgebracht wird, wobei die elektrische Isolierung (108) eine Haftschicht (204), die auf eine radiale Außenfläche (202) des länglichen Körpers aufgebracht wird, und eine elektrische Isolationsschicht (206) umfasst, die auf eine Oberseite der Haftschicht (204) und eine erste Versiegelungsschicht (208a) aufgebracht wird, die gefolgt von einer Wärmebehandlung der Spindel (100) auf die elektrische Isolationsschicht (206) aufgebracht wird;
**dadurch gekennzeichnet, dass** das ersten und zweite Ende (102a, 102b) jeweils an einen übertägigen und einen untertägigen Bohrgestängeschuss (104a, 104b) gekoppelt ist und wobei die Haftschicht (204) ein Material umfasst, das aus der Gruppe ausgewählt ist, die aus einer Nickel-Chrom-Legierung, Molybdän, einer Nickel-Aluminium-Verbindung, Aluminiumbronze, vorlegiertem Nickelaluminium und einer zinkbasieren Legierung besteht und wobei die elektrische Isolationsschicht (206) ein Material umfasst, das aus der Gruppe ausgewählt ist, die aus Zirkonoxid, Aluminiumoxid, Chromoxid, Titanoxid, Dioxiden davon, gebranntem Glas, Porzellan, einem Polymermaterial, einem Harzmaterial (einschließlich Natur- und Kunstharzen), Kunststoffen und beliebigen Zusammensetzungen davon besteht;
**dadurch gekennzeichnet, dass** die elektrische Isolierung (108) ferner eine Pufferschicht (302) umfasst, die zwischen der Haftschicht (204) und der radialen Außenfläche (202) des länglichen Körpers liegt, wobei die Pufferschicht eine austenitische nickel-chrombasierte Legierung umfasst.

2. Spindel nach Anspruch 1, ferner umfassend eine zweite Versiegelungsschicht (208b), die auf die erste Versiegelungsschicht (208a) aufgebracht wird.

3. Spindel nach Anspruch 2, wobei die erste und zweite Versiegelungsschicht (208a, 208b) ein Material umfassen, das aus der Gruppe ausgewählt ist, die aus einem Epoxid, einem Phenolharz, einem Furan, einem Polymethacrylat, einem Silikon, einem Polyester, einem Polyurethan, einem Polyvinylester, einem Wachs, einer Phosphorsäure, einem Aluminiumphosphat, einem Natriumsilicat, einem Ethylsilicat, einer Chromsäure und beliebigen Kombinationen davon besteht.

4. Spindel nach Anspruch 2, wobei die zweite Versiegelungsschicht (208b) nach einer Wärmebehandlung der Spindel (100) auf die erste Versiegelungsschicht (208a) aufgebracht wird; wobei die zweite Versiegelungsschicht (208b) vorzugsweise auf die erste Versiegelungsschicht (208a) aufgebracht wird, bevor die Spindel (100) eine Zimmertemperatur erreicht hat.

5. Spindel nach Anspruch 1, wobei die elektrische Isolierung (108) auf einen Abschnitt mit verringertem Durchmesser des länglichen Körpers aufgebracht wird.

6. Spindel nach Anspruch 1, wobei die elektrische Isolationsschicht (206) in einer Dicke von 0,030 Zoll (0,76 mm) aufgebracht wird.

7. Prozess, umfassend:
Aufbringen einer elektrischen Isolierung (108) auf eine radiale Außenfläche (202) einer Spindel (100) nach Anspruch 1, wobei die elektrische Isolierung (108) eine Haftschicht (204) und eine elektrische Isolationsschicht (206) umfasst;
wobei das Aufbringen der elektrischen Isolierung (108) Folgendes umfasst:
Aufbringen einer Pufferschicht (302) auf die radiale Außenschicht (202) der Spindel (100), wobei die Pufferschicht eine austenitische nickel-chrombasierte Legierung umfasst;
Aufbringen der Haftschicht (204) auf der Pufferschicht (302), wobei die Haftschicht (204) ein Material umfasst, das aus der Gruppe ausgewählt ist, die aus einer Nickel-Chrom-Legierung, Molybdän, einer Nickel-Aluminium-Verbindung, Aluminiumbronze, vorlegiertem Nickelaluminium und einer zinkbasieren Legierung besteht;
Aufbringen der elektrischen Isolationsschicht (206) auf eine Oberseite der Haftschicht (204), wobei die elektrische Isolationsschicht (206) ein Material umfasst, das aus der Gruppe ausgewählt ist, die aus Zirkonoxid, Aluminiumoxid, Chromoxid, Titanoxid, Dioxiden davon, gebranntem Glas, Porzellan, einem Polymermaterial, einem Harzmaterial (einschließlich Natur- und Kunstharzen), Kunststoffen und beliebigen Zusammensetzungen davon besteht; wobei die elektrische Isolationsschicht durch (206) durch Folgendes aufgebracht wird: thermisches Spritzen; Aufbringen einer ersten Versiegelungsschicht (208a) auf die elektrische Isolationsschicht (206) und Wärmebehandeln der Spindel (100) in einem Ofen.

8. Prozess nach Anspruch 7, ferner umfassend Aufbringen einer zweiten Versiegelungsschicht (208b) auf die erste Versiegelungsschicht (208a) nach dem Wärmebehandeln der Spindel (100) in dem Ofen; wobei der Prozess vorzugsweise ferner Aufbringen der zweiten Versiegelungsschicht (208b) auf die erste Versiegelungsschicht (208a) umfasst, bevor die Spindel (100) eine Zimmertemperatur erreicht hat.

9. Prozess nach Anspruch 8, wobei die erste und zweite Versiegelungsschicht (208a, 208b) ein Material umfassen, das aus der Gruppe ausgewählt ist, die aus einem Epoxid, einem Phenolharz, einem Furan, einem Polymethacrylat, einem Silikon, einem Polyester, einem Polyurethan, einem Polyvinylester, einem Wachs, einer Phosphorsäure, einem Aluminiumphosphat, einem Natriumsilicat, einem Ethylsilicat, einer Chromsäure und beliebigen Kombinationen davon besteht.

10. Prozess nach Anspruch 7, ferner umfassend Aufbringen der elektrischen Isolierung (108) auf einen Abschnitt mit verringertem Durchmesser der Spindel.

11. Prozess nach Anspruch 7, wobei der Prozess ferner Aufbringen der elektrischen Isolierung (108) in einer Dicke von 0,030 Zoll (0,76 mm) umfasst.

## Revendications

1. Mandrin (100), comprenant :
un corps allongé ayant une première extrémité (102a) et une seconde extrémité (102b) ;
une isolation électrique (108) appliquée sur au moins une partie du corps allongé, l'isolation électrique (108) comprenant un revêtement de liaison (204) appliqué sur une surface radiale externe (202) du corps allongé, une couche d'isolation électrique (206) appliquée par-dessus le revêtement de liaison (204) et une première couche d'étanchéité (208a) appliquée sur la couche d'isolation électrique (206) suivie d'un traitement thermique du mandrin (100) ;
**caractérisé en ce que** les première et seconde extrémités (102a, 102b) sont couplées à des sections de train de forage en haut de puits et en fond de puits (104a, 104b), respectivement, et dans lequel le revêtement de liaison (204) comprend un matériau choisi dans le groupe constitué d'un alliage de nickel-chrome, d'un molybdène, d'un composite nickel-aluminium, d'un bronze d'aluminium, d'un pré-alliage de nickel-aluminium et d'un alliage à base de zinc et dans lequel la couche d'isolation électrique (206) comprend un matériau choisi dans le groupe constitué d'oxyde de zirconium, d'oxyde d'aluminium, d'oxyde de chrome, d'oxyde de titane, de dioxydes de ceux-ci, de verre cuit, de porcelaine, d'un matériau polymère, d'un matériau de résine (y compris les résines naturelles ou synthétiques), de plastiques et de composites de ceux-ci ;
**caractérisé en ce que** l'isolation électrique (108) comprend en outre une couche tampon (302) interposant le revêtement de liaison (204) et la surface radiale externe (202) du corps allongé, dans lequel la couche tampon comprend un alliage austénitique à base de nickel-chrome.

2. Mandrin selon la revendication 1, comprenant en outre une seconde couche d'étanchéité (208b) appliquée sur la première couche d'étanchéité (208a).

3. Mandrin selon la revendication 2, dans lequel les première et seconde couches d'étanchéité (208a, 208b) comprennent un matériau choisi dans le groupe constitué d'un époxy, d'un phénolique, d'un furanne, d'un polyméthacrylate, d'un silicone, d'un polyester, d'un polyuréthane, d'un polyvinylester, d'une cire, d'acide phosphorique, d'un phosphate d'aluminium, d'un silicate de sodium, d'un silicate d'éthyle, d'un acide chromique et de toutes combinaisons de ceux-ci.

4. Mandrin selon la revendication 2, dans lequel la seconde couche d'étanchéité (208b) est appliquée sur la première couche d'étanchéité (208a) à la suite d'un traitement thermique du mandrin (100) ; de préférence dans lequel la seconde couche d'étanchéité (208b) est appliquée sur la première couche d'étanchéité (208a) avant que le mandrin (100) n'atteigne la température ambiante.

5. Mandrin selon la revendication 1, dans lequel l'isolation électrique (108) est appliquée sur une partie à diamètre réduit du corps allongé.

6. Mandrin selon la revendication 1, dans lequel la couche d'isolation électrique (206) est appliquée sur une épaisseur de 0,76 mm (0,030 pouce).

7. Procédé, comprenant :
l'application d'une isolation électrique (108) sur une surface radiale externe (202) d'un mandrin (100) selon la revendication 1, l'isolation électrique (108) comprenant un revêtement de liaison (204) et une couche d'isolation électrique (206) ;
dans lequel l'application de l'isolation électrique (108) comprend :
l'application d'une couche tampon (302) sur la surface radiale externe (202) du mandrin (100) dans lequel la couche tampon comprend un alliage austénitique à base de nickel-chrome ;
l'application du revêtement de liaison (204) sur la couche tampon (302) dans lequel le revêtement de liaison (204) comprend un matériau choisi dans le groupe constitué d'un alliage de nickel-chrome, d'un molybdène, d'un composite nickel-aluminium, d'un bronze d'aluminium, d'un pré-alliage de nickel-aluminium et d'un alliage à base de zinc ;
l'application de la couche d'isolation électrique (206) par-dessus le revêtement de liaison (204) dans lequel la couche d'isolation électrique (206) comprend un matériau choisi dans le groupe constitué d'oxyde de zirconium, d'oxyde d'aluminium, d'oxyde de chrome, d'oxyde de titane, de dioxydes de ceux-ci, de verre cuit, de porcelaine, d'un matériau polymère, d'un matériau de résine (y compris les résines naturelles ou synthétiques), de plastiques et de tous composites de ceux-ci ; dans lequel la couche d'isolation électrique (206) est appliquée par pulvérisation thermique ; l'application d'une première couche d'étanchéité (208a) sur la couche d'isolation électrique (206) et le traitement thermique du mandrin (100) dans un four.

8. Procédé selon la revendication 7, comprenant en outre l'application d'une seconde couche d'étanchéité (208b) sur la première couche d'étanchéité (208a) à la suite d'un traitement thermique du mandrin (100) dans le four ; de préférence dans lequel le procédé comprend en outre l'application de la seconde couche d'étanchéité (208b) sur la première couche d'étanchéité (208a) avant que le mandrin (100) n'atteigne la température ambiante.

9. Procédé selon la revendication 8, dans lequel les première et seconde couches d'étanchéité (208a, 208b) comprennent un matériau choisi dans le groupe constitué d'un époxy, d'un phénolique, d'un furanne, d'un polyméthacrylate, d'un silicone, d'un polyester, d'un polyuréthane, d'un polyvinylester, d'une cire, d'un acide phosphorique, d'un phosphate d'aluminium, d'un silicate de sodium, d'un silicate d'éthyle, d'un acide chromique et de toutes combinaisons de ceux-ci.

10. Procédé selon la revendication 7, comprenant en outre l'application de l'isolation électrique (108) sur une partie à diamètre réduit du mandrin.

11. Procédé selon la revendication 7, dans lequel le procédé comprend en outre l'application de l'isolation électrique (108) sur une épaisseur de 0,76 mm (0,030 pouce).
